# EUROPEAN PATENT APPLICATION

(11) **EP 2 688 007 A1**
(43) Date of publication of application: **22.01.2014**
(21) Application number: 12176480.7
(22) Date of filing: 15.07.2012
(51) Int. Cl.: G06F 21/00, G06F 17/30

(54) **Method of automatically extracting features from a computer readable file**

(71) Applicant: Eberhard Karls Universität Tübingen, 72074 Tübingen (DE)
(72) Inventor: Laskov, Pavel, 72072 Tübingen (RU); Srndic, Nedim, 72072 Tübingen (BA)
(74) Representative: Patentanwälte Ruff, Wilhelm, Beier, Dauster & Partner

(57) **Abstract**

A method of automatically extracting features (1) from a computer readable file (2) having a given file type, the features (1) usable for characterization and/or classification of the file (2), the file (2) comprising a number of objects (3a, 3b, 3c), the objects (3a, 3b, 3c) being logically organized such that structural relationships are defined between objects (3a, 3b, 3c), comprises the step of: automatically generating the features (1) based on the structural relationships between the objects (3a, 3b, 3c).

## Description

The invention relates to a method of automatically extracting features from a computer readable file having a given file type, a method of generating a classifier for classifying a computer readable file having a given file type, a method of classifying a computer readable file having a given file type and a method of comparing files having a given file type.

US 2009/0013405 A1 discloses the scanning of computer files for malware uses a classifying technique to classify an input file as a clean file or a dirty file. The parameters of the classifying technique are derived to train the classification on a corpus of reference files including clean files known to be free of malware and dirty files known to contain malware. The classification is performed using a representation of the files in a feature space defined by a set of predetermined features for respective file formats, the features being a predetermined value or range of values for one or more data fields of given meanings. The representation of a file is derived by determining the file format, parsing the file on the basis of the structure of data fields in the determined file format to identify the data fields and their meaning, and determining, on the basis of the identified data fields, which of the set of predetermined features are present.

It is the technical problem underlying the invention to provide for a method of automatically extracting features from a computer readable file having a given file type, a method of generating a classifier for classifying a computer readable file having a given file type, a method of classifying a computer readable file having a given file type and a method of comparing files having a given file type, not needing a priori knowledge and definition of features to be extracted from the files, increasing safety against attacks and/or increasing the capabilities of classification.

The invention solves this problem by providing a method of automatically extracting features from a computer readable file having a given file type according to claim 1, a method of generating a classifier for classifying a computer readable file having a given file type according to claim 7, a method of classifying a computer readable file having a given file type according to claim 10 and a method of comparing files having a given file type according to claim 11.

Provided is method of automatically or machine-based extracting a set of features from a computer readable file having a given file type, the set of features usable for automatic or machine-based characterization and/or classification of the file.

The file comprises a number of logical objects, the objects being hierarchically logically organized such that structural relationships are defined between at least some of the objects.

The set of features is automatically or machine-based generated based on at least a part of the structural relationships between the objects. Thus, it is not necessary to a priori define specific features to be extracted, as e.g. disclosed in US 2009/0013405 A1. The features are dynamically and automatically generated based on files used as training data. Therefore, the protection against attacks is increased, since a potential attacker has no knowledge regarding the used features. Further, no human expert analysis regarding optimum features is necessary.

The file may be parsed to create a parser representation of the file and the structural relationship between the objects may be generated based on the parser representation.

The objects may be hierarchically organized, e.g. in a tree or an extended tree based ordering.

The objects may be organized by structural parent child relationships, wherein an object may be declared as a named child of another object. Names selected of a group of predetermined names may be assigned to the objects, the names corresponding to properties of the objects. The names may correspond to predetermined types of the objects, the types defined by the file type.

Each of the number of objects may have a corresponding object type, the object type selected from a root object type, the root object type corresponding to an object having at least one child object but no parent object, an intermediate object type, the intermediate object type corresponding to an object having at least one parent object and at least one child object, and a leaf object type, the leaf object type corresponding to an object having at least one parent object but no child object.

The structural relationships may be represented by paths or properties of paths from an object having the root object type to objects having the leaf object type.

The features may be generated based on counts of paths having identical properties, wherein paths have identical properties, if the numbers of objects along the paths are identical and corresponding objects along the paths have identical object names.

The type of file may be Portable Document Format (PDF), Hypertext Markup Language (HTML), Shockwave Flash (SWF), Office Open XML. It is self-evident, that all types of files may be used having an inherent logical structure usable for structural feature extraction.

Provided is a method of generating a classifier for classifying a computer readable file having a given file type. The method comprises the steps of: providing files having the given file type, automatically extracting features from each file of the files using the above described method and generating the classifier using the extracted features of the files.

The method may comprise the steps of: providing classified files having the given file type, and generating the classifier using the extracted features of the files and the classification of the files.

The files may be classified into good and malign files. It is self-evident, that the files may be classified into more than two categories, wherein the categories may e.g. be assigned numbers, characters, etc.

Provided is a method of classifying a computer readable file having a given file type, the method comprising the steps of: automatically extracting features from the file using the feature extracting method described above and using the classifier generated by the method of generating a classifier described above to classify the file.

Provided is a method of comparing files having a given file type, the method comprising the step of: automatically extracting features from the files using the method of extracting features as described above and determining the files as similar, if the features of the files satisfy a given similarity criteria.

The files may be determined as similar, if the features of the files are identical.

The invention will now be described using the attached schematic drawings, wherein
- Fig. 1: depicts different representations of a computer readable file to be classified and
- Fig. 2: a system architecture of the invention.

The invention will now be described with reference to files having the Portable Document Format (PDF) format. It is self-evident, that various other file types may be used in context of the invention.

Portable Document Format (PDF) is an open standard published as ISO 32000-1:2008 [16] and referred to as the PDF Reference hereinafter.

The syntax of PDF comprises the four main elements:1) Objects. These are the basic building blocks in PDF. 2) File structure. It specifies how objects are layed out and modified in a PDF file. 3) Document structure. It determines how objects are logically organized to represent the contents of a PDF file (text, graphics, etc.). 4) Content streams. They provide a means for efficient storage of various parts of the document content.

Further, there exist 9 basic object types in PDF. Simple object types are Boolean, Numeric, String and Null. PDF strings have bounded length and are enclosed in brackets '(' and ')'. The type Name is used as an identifier in the description of the PDF document structure. Names are introduced using the character '/' and can contain arbitrary characters except null (0x00). The aforementioned 5 object types will be referred to as primitive types in this description. An Array is a one-dimensional ordered collection of PDF objects enclosed in square brackets, '[' and ']'. Arrays may contain PDF objects of different type, including nested arrays. A Dictionary is an unordered set of key-value pairs enclosed between the symbols '<<' and '>>'. The keys must be name objects and must be unique within a dictionary. The values may be of any PDF object type, including nested dictionaries. A Stream object is a PDF dictionary followed by a sequence of bytes. The bytes represent information which may be compressed or encrypted, and the associated dictionary contains information on whether and how to decode the bytes. These bytes usually contain content to be rendered, but may also contain a set of other objects. Finally, an indirect object is any of the previously defined objects supplied with a unique object identifier and enclosed in the keywords obj and endobj. Due to their unique identifiers, indirect objects can be referenced from other objects via indirect references.

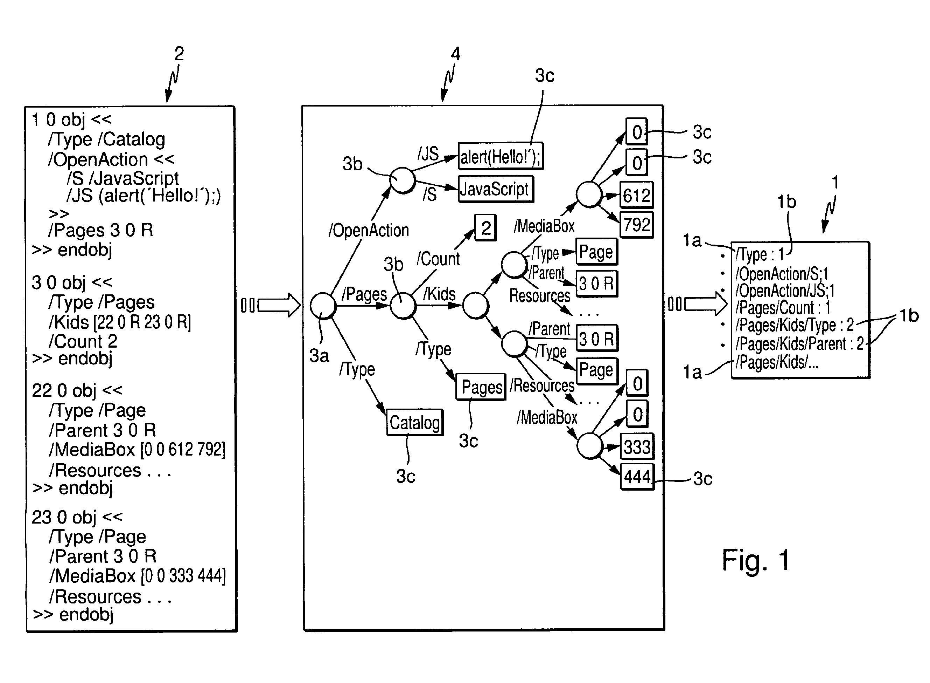

The syntax of PDF objects is illustrated in a simplified exemplary PDF file 2 shown in the left-hand side of Fig. 1.

The PDF file 2 contains four indirect objects denoted by their two-part object identifiers, e.g., 1 0 for the first object, and the obj and endobj keywords. These objects are dictionaries, as they are surrounded with the symbols '<<' and '>>'. The first one is the Catalog dictionary, denoted by its Type entry which contains a PDF name with the value Catalog. The Catalog has 2 additional dictionary entries: Pages and OpenAction. OpenAction is an example of a nested dictionary. It has two entries: S, a PDF name indicating that this is a JavaScript action dictionary, and JS, a PDF string containing the actual JavaScript script to be executed: alert('Hello!');. Pages is an indirect reference to the object with the object identifier 3 0: the Pages dictionary that immediately follows the Catalog. It has an integer, Count, indicating that there are 2 pages in the document, and an array Kids identifiable by the square brackets, with two references to Page objects. The same object types are used to build the remaining Page objects. Notice that each of the Page objects contains a backward reference to the Pages object in their Parent entry. Altogether, there are three references pointing to the same indirect object, Pages.

The relations between various basic objects constitute the logical, tree-like document structure of the PDF-file 2, illustrated in the middle part of Figure 1.

The nodes in the document structure are objects 3a, 3b and 3c themselves, and the edges correspond to the names (e.g. Pages, Kids, etc.) under which child objects reside in a parent object.

For arrays, parent-child relationship is nameless and corresponds to an integer index of individual elements. Notice that the document structure is, strictly speaking, not a tree but rather a directed, potentially cyclic graph, as indirect references may point to other objects anywhere in the document structure.

The root node 3a in the document structure is a special PDF dictionary with the mandatory Type entry containing the name Catalog.

Any object of a primitive type constitutes a leaf or leaf object 3c in the document structure.

Objects not being a root object 3a or a leaf object 3c are denoted intermediate objects 3b.

Following, the general methodology and the technical instruments needed for the analysis of the document structure leading to a reliable discrimination between malicious and benign PDF documents will be described.

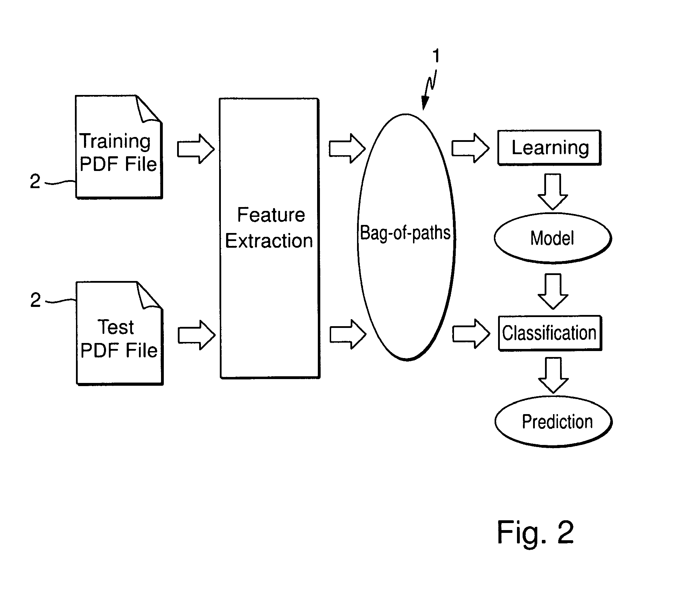

The proposed method for structure-based detection of malicious PDF documents comprises the following steps, schematically shown in Fig. 2:
1) Extraction of structural features 1. As the basic pre-processing step, the content of a PDF document or PDF file 2 is parsed and converted into the special form of structural features, so called bag-of-paths 1, which characterizes the document structure in a well-defined way.
2) Learning and classification. The detection process is driven by examples of malicious and benign PDF documents 2. During the learning step, a model including a classifier is created from the data with known classification ("training data"). The model encodes the differences between the malicious and benign data. During the classification step, the model is applied to new data ("test data"), in order to classify it as malicious or benign.

The technical realization of these two fundamental tasks is presented below.

A common approach to the design of data-driven security instruments is to a priori define a set of "intrinsic features" which are subsequently used for learning and classification. It was successfully applied for network intrusion detection [13, 15], botnet detection [9], detection of drive-by-downloads [6, 7, 3], and some other related problems. The challenge in defining features for detection of malicious PDF documents lies in the extremely complex structure of the PDF format.

The invention therefore departs from the knowledge-driven strategy mentioned above and considers a rich set of potential features which matches the complexity of PDF structure. These features will be later automatically reduced to a smaller subset based on the available data.

The goal of the structural analysis of PDF documents is to recover all parent-child relations between its objects 3a, 3b and 3c. The document structure can be represented by a set of paths 1 a from the root or root object 3a to leaves or leaf objects 3c ("bag of paths").

For the sake of simplicity, in the following description each path is denoted 1 a and each path count is denoted 1 b. It is self-evident, that although denoted with identical reference signs, the paths (and eventually the corresponding counts) differ from each other. Accordingly, different objects are denoted with identical reference signs 3a, 3b and 3c, respectively.

Formally, the invention defines a structural path 1a to be a concatenation of the object names encountered along the edges leading to a specific leaf or leaf object 3c.

For notational convenience, the invention uses the forward slash symbol '/' as a delimiter between the names on a structural path.

The same structural path 1a may occur multiple times in a document if the same path crosses some arrays and leads to different leaf objects 3c. The counts 1b of specific paths 1a in a document constitute a very good measure of structural similarity between different documents.

On the other hand, multiple structural paths may lead to the same object due to indirect references. Such references may even form circular dependencies, in which case the set of structural paths becomes infinite. In some semantic constructs of PDF, e.g., page trees, multiple paths are required in order to facilitate content rendering. Precise treatment of indirect references is only possible with directed graphs. However, comparison of graphs is computationally difficult, and hence we adhere to the tree-like view of the document structure and introduce additional heuristics which produce a finite set of structural paths while keeping a good semantic approximation of the existing relations.

Thus the main operation to be performed in the inventive feature extraction step is to count the structural paths having identical properties in a document 2, as shown in Figure 1, right.

Additional transformations, to be referred to as "embeddings", can be applied to the path counts. The binary embedding detects the presence of non-zero counts, the frequency embedding divides the counts over the total number of paths in a document, while the count embedding refers to the path count itself.

Extraction of the structural features must meet the following requirements:
R1) All paths 1 a must be extracted with their exact counts 1 b.
R2) The algorithm must be deterministic, i.e., it must produce the same set of paths for PDF files 2 with the same logical structure.
R3) The choice among multiple paths to a given object should be semantically the most meaningful one with respect to the PDF Reference [16].

As a first step in the feature extraction process, the document 2 is parsed using e.g. the established PDF parser Poppler.

The parser maintains an internal representation 4 of the document 2 and provides access to all fields of individual objects. Conceptually, path extraction amounts to a recursive enumeration of leafs or leaf objects 3c in the document structure, starting from the Catalog object returned by the parser.

The extracted paths 1a are inserted into a suitable data structure, e.g., a hash table or a map, to accumulate the counts of structural paths. Several refinements may be introduced to this general algorithm to ensure that it terminates and that the above mentioned requirements are met.

The requirement R1 is naturally satisfied by the recursive nature of our feature extraction. Since the recursion terminates only if a leaf node or leaf object 3c is encountered, the algorithm is guaranteed to never underestimate the count 1 b of a particular path 1 a. To prevent an overestimation of the path count 1 b due to multiple paths as well as an infinite recursion due to circular references, the requirement R3 must be enforced.

The enforcement of requirements R2 and R3 is tightly coupled and ultimately boils down to the intelligent treatment of indirect references. Obviously, one cannot always dereference them, as this may result in an infinite recursion. One cannot also avoid their dereferencing, as this would hardly ever move the algorithm beyond the root node. Hence, a consistent strategy for selective dereferencing should be implemented.

In the inventive extraction algorithm, these issues are approached by maintaining a breadth-first search (BFS) order in the enumeration of leaf objects 3c. This strategy essentially postulates that the shortest path to a given leaf is semantically the most meaningful. For example, this observation intuitively holds for various cases when circular relations arise from explicit upward references by means of the Parent entry in a dictionary, as demonstrated by the example in Fig. 1.

Two further technical details are useful for the implementation of the BFS traversal. It is important to keep track of all objects visited at least once during the traversal and backtrack whenever an object is visited more than once. It is also necessary to sort all entries in a dictionary in some fixed order before descending to the node's children. Since no specific ordering of dictionary fields is required by the PDF Reference, such ordering must be artificially enforced in order to satisfy the requirement R2.

Once the counts 1 b or other embeddings over the set of structural paths 1a are extracted, almost any learning algorithm can be applied to create a model including a classifier from the given training data and use this model to classify unknown examples.

For an overview of suitable algorithms, the expert may refer to any standard textbook on machine learning, e.g., [1, 10], or use any entry-level machine learning toolbox, such as SHOGUN or WEKA.

Be means of example, two specific algorithms are described, decision trees and Support Vector Machines, for subjective reasons presented in the following section along with a high-level description of the respective method.

Although both of the chosen methods are, in principle, suitable for high-dimensional data, the dimensionality may be artificially reduced for computational reasons by selecting only those paths 1 a that occur in at least a predetermined number of training files. This reduces the number of features significantly.

It is not necessary to use class information for the selection of "discriminative features" as it was done, e.g., in Zozzle [7]. Such manual preselection of features introduces an artificial bias to a specific dataset and provides an attacker with an easy opportunity to evade the classifier by adding features from the opposite class to his malicious examples.

The decision tree is a popular classification technique in which predictions are made in a sequence of single-attribute tests. Each test either assigns a certain class to an example or invokes further tests. Decision trees have arisen from the field of operational decision making and are especially attractive for security applications, as they provide a clear justification for specific decisions - the feature extremely appreciated by security administrators.

The goal of automatic decision tree inference is to build a decision tree from known classifications of training data. Several classical algorithms exist for decision tree inference, e.g., CART [2], RIPPER [4], C4.5 [18].

The Support Vector Machine (SVM) is another popular machine learning algorithm [5]. Its main geometric idea is to fit a hyperplane to data in such a way that examples of both classes are separated with the largest possible margin M. In the case of a linear decision function, it is represented by the hyperplane's weight vector w and the threshold p which are directly used to assign labels y to unknown examples x.

Nonlinear decision functions are possible by applying a nonlinear transformation to input data which maps it into a feature space with special properties, the so-called Reproducing Kernel Hilbert Space (RKHS). The elegance of SVM consists in the fact that such transformation can be done implicitly, by choosing an appropriate nonlinear kernel function k(x1,x2) which compares two examples x1 and x2. The solution α to the dual SVM learning problem, equivalent to the primal solution w, can be used for a nonlinear decision function expressed as a comparison of an unknown example x with selected examples xi in the training data, the so-called "support vectors".

The invention provides for a method for automatically extracting features e.g. being usable for the detection of malicious PDF files based on the difference between the underlying structural properties of benign and malicious PDF files.

The automatically extracted features may also be used to determine similarities between different files.

By relying on structure instead of the actual content, it renders it unnecessary to deal with the very expressive PDF obfuscation techniques, interpretation of JavaScript and dynamic execution - hard problems that related methods continue to struggle with - and reaps the benefits of remaining a static method: very high throughput and robustness.

### References

[1] C. M. Bishop. Pattern Recognition and Machine Learning. Springer, 2007.
[2] L. Breiman, J. Friedman, J. Olshen, and C. Stone. Classification and Regression Trees. Wadsworth, 1984.
[3] D. Canali, M. Cova, G. Vigna, and C. Kruegel. Prophiler: a fast filter for the large-scale detection of malicious web pages. In International Conference on World Wide Web (WWW), pages 197-206, 2011.
[4] W. Cohen. Fast effective rule induction. In International Conference on Machine Learning (ICML), pages 115-123, 1995.
[5] C. Cortes and V. Vapnik. Support vector networks. Machine Learning, 20:273-297, 1995.
[6] M. Cova, C. Kruegel, and G. Vigna. Detection and analysis of drive-by-download attacks and malicious JavaScript code. In International Conference on World Wide Web (WWW), pages 281-290, 2010.
[7] C. Curtsinger, B. Livshits, B. Zorn, and C. Seifert. ZOZZLE: Fast and precise in-browser JavaScript malware detection. In USENIX Security Symposium, pages 33-48, 2011.
[8] M. Engelberth, C. Willems, and H. T. MalOffice - analysis of various application data files. In Virus Bulletin International Conference, 2009.
[9] G. Gu, P. Porras, V. Yegneswaran, M. Fong, and W. Lee. BotHunter: Detecting malware infection through IDS-driven dialog correlation. In USENIX Security Symposium, pages 167-182, 2007.
[10] T. Hastie, R. Tibshirani, and J. Friedman. The Elements of Statistical Learning: data mining, inference and prediction. Springer series in statistics. Springer, New York, N.Y., 2009. 2nd edition.
[11] Vorsicht bei angeblicher telekom-onlinerechnung. http://heise.de/- 1545909.
[12] P. Laskov and N. 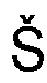 rndić. Static detection of malicious JavaScript-bearing PDF documents. In Proceedings of the 27th Annual Computer Security Applications Conference, ACSAC '11, pages 373-382, New York, NY, USA, 2011. ACM.
[13] W. Lee, S. Stolfo, and K. Mok. A data mining framework for building intrusion detection models. In IEEE Symposium on Security and Privacy, pages 120-132, 1999.
[14] W.-J. Li, S. Stolfo, A. Stavrou, E. Androulaki, and A. Keromytis. A study of malcode-bearing documents. In Detection of Intrusions and Malware & Vulnerability Assessment (DIMVA), pages 231-250, 2007.
[15] M. Mahoney and P. Chan. Learning rules for anomaly detection of hostile network traffic. In International Conference on Data Mining (ICDM), 2003.
[16] PDF Reference. http://www.adobe.com/devnet/pdf/pdf_reference.html, 2008.
[17] N. Provos, P. Mavrommatis, M. Abu Rajab, and F. Monrose. All your iFRAMEs point to us. In USENIX Security Symposium, pages 1-16, 2008.
[18] J. Quinlan. C4.5: Programs for Machine Learning. Morgan Kaufmann, 1992.
[19] Blackhole crimeware kit drives web threat spike. http://www.theregister.co.uk/2012/01/26/ sophos_fakeav _conficker/.
[20] K. Rieck, T. Holz, K. Willems, P. Düssel, and P. Laskov. Learning and classification of malware behavior. In Detection of Intrusions and Malware & Vulnerability Assessment (DIMVA), 5th International Conference, pages 108-125, July 2008.
[21] K. Rieck, T. Krüger, and A. Dewald. Cujo: Efficient detection and prevention of drive-by-download attacks. In Annual Computer Security Applications Conference (ACSAC), pages 31-39, 2010.
[22] Z. Shafiq, S. Khayam, and M. Farooq. Embedded malware detection using markov n-grams. In Detection of Intrusions and Malware & Vulnerability Assessment (DIMVA), pages 88-107, 2008.
[23] K. Z. Snow, S. Krishnan, F. Monrose, and N. Provos. ShellOS: Enabling fast detection and forensic analysis of code injection attacks. In USENIX Security Symposium, 2011.
[24] PDF malware writers keep targeting vulnerability. http://www.symantec.com/connect/blogs/pdf-malware-writers-keep-targeting-vulnerability.
[25] Z. Tzermias, G. Sykiotakis, M. Polychronakis, and E. Markatos. Combining static and dynamic analysis for the detection of malicious documents. In European Workshop on System Security (EuroSec), 2011.
[26] C. Willems, T. Holz, and F. Freiling. CWSandbox: Towards automated dynamic binary analysis. IEEE Security and Privacy, 5(2):32-39, 2007.

## Claims

1. Method of automatically extracting features (1) from a computer readable file (2) having a given file type, the features (1) usable for characterization and/or classification of the file (2), the file (2) comprising a number of objects (3a, 3b, 3c), the objects (3a, 3b, 3c) being logically organized such that structural relationships are defined between objects (3a, 3b, 3c),
the method comprising the step of:
- automatically generating the features (1) based on the structural relationships between the objects (3a, 3b, 3c).

2. Method according to claim 1, **characterized by** the steps of:
- parsing the file (2) to create a parser representation (4) of the file and
- determining the structural relationship between the objects (3a, 3b, 3c) based on the parser representation (4).

3. Method according to claim 1 or 2, **characterized in that**
- the objects (3a, 3b, 3c) are hierarchically organized.

4. Method according to anyone of the preceding claims, **characterized in that**
- the objects (3a, 3b, 3c) are organized by structural parent child relationships, wherein an object may be declared as a named child of another object, and wherein
- each of the number of objects has a corresponding object type, the object type selected from
- a root object type, the root object type corresponding to an object (3a) having at least one child object but no parent object,
- an intermediate object type, the intermediate object type corresponding to an object (3b) having at least one parent object and at least one child object, and
- a leaf object type, the leaf object type corresponding to an object (3c) having at least one parent object but no child object,
- wherein the structural relationships are represented by paths (1a) from an object (3a) having the root object type to objects (3c) having the leaf object type.

5. Method according to claim 4, **characterized in that**
- the features (1) are generated based on counts (1b) of paths (1 a) having identical properties, wherein paths (1 a) have identical properties, if the numbers of objects along the paths are identical and corresponding objects along the paths (1a) have identical object names.

6. Method according to anyone of the preceding claims, **characterized in that** the type of file is Portable Document Format (PDF), Hypertext Markup Language (HTML), Shockwave Flash (SWF), Office Open XML.

7. Method of generating a classifier for classifying a computer readable file (2) having a given file type, the method comprising the steps of:
- providing files (2) having the given file type,
- automatically extracting features (1) from each file of the files (2) using the method of anyone of claims 1 to 6 and
- generating the classifier using the extracted features (1) of the files (2).

8. Method according to claim 7, **characterized by** the steps of:
- providing classified files (2) having the given file type, and
- generating the classifier using the extracted features (1) of the files (2) and the classification of the files (2).

9. Method according to claim 8, **characterized in that**
- that the files (2) are classified into good and malign files.

10. Method of classifying a computer readable file (2) having a given file type, the method comprising the steps of:
- automatically extracting features (1) from the file (2) using the method of anyone of claims 1 to 6 and
- using the classifier generated by the method of anyone of claims 7 to 9 and the extracted features (1) to classify the file (2).

11. Method of comparing files (2) having a given file type, the method comprising the step of:
- automatically extracting features (1) from the files using the method of anyone of claims 1 to 6 and
- determining the files (2) as similar, if the features (1) of the files satisfy a given similarity criteria.

12. Method according to claim 11, **characterized in that**
- the files (2) are determined as similar, if the features (1) of the files (2) are identical.
